# EUROPÄISCHE PATENTSCHRIFT

(11) **EP 2 696 093 B1**
(45) Veröffentlichungstag und Bekanntmachung des Hinweises auf die Patenterteilung: **17.09.2014**
(21) Anmeldenummer: 13173056.6
(22) Anmeldetag: 20.06.2013
(51) Int. Cl.: F16D 66/02

(54) **Reibbelagsverschleißsensor**
Friction lining wear sensor
Capteur d'usure de garniture de friction

(30) Priorität: 18.07.2012 DE 102012014155
(43) Veröffentlichungstag der Anmeldung: 12.02.2014
(73) Patentinhaber: BOWA-electronic GmbH & Co. KG, 72810 Gomaringen (DE)
(72) Erfinder: Böttle, Bernd, 72138 Kirchentellinsfurt (DE); Sandtrock, Volker, 72127 Kusterdingen (DE)
(74) Vertreter: Schneider, Peter Christian

(56) Entgegenhaltungen:
- EP-A2- 0 992 703
- DE-A1- 4 021 568
- DE-T2- 69 200 824

## Beschreibung

### Gebiet der Erfindung

### Die Erfindung bezieht sich auf einen

Reibbelagsverschleißsensor mit einem Sensorkörper, der von einer in einer den Sensorkörper außen umlaufenden, offenen Nut verlegten Leiterschleife umschlungen ist, wobei eine Zuleitung zu und eine Ableitung von der Leiterschleife an einem Ende des Sensorkörpers zu einem Leiterpaar gebündelt und am Sensorkörper fixiert sind.

### Stand der Technik

Derartige Reibbelagsverschleißsensoren sind bekannt aus der EP 2 175 158 A1. Solche Sensoren werden häufig in Kraftfahrzeugen eingesetzt, um dem Fahrer zu signalisieren, dass ein Bremsbelag eine kritische Verschleißgrenze erreicht hat. Das Wirkprinzip solcher Sensoren besteht darin, dass ein elektrischer Testleiter, der sich von der der Gegenreibfläche, z.B. der Bremsscheibe, abgewandten Seite des Belags um eine definierte Tiefe in eine Ausnehmung des Belags hinein erstreckt, bei übermäßigem Verschleiß des Belags während des Reibvorgangs mit der Gegenreibfläche in Kontakt kommt und zerstört wird. Daraufhin kann ein elektrisches Testsignal nicht mehr über den Testleiter übertragen werden, was von einer geeignet eingerichteten Steuervorrichtung registriert und in ein entsprechendes Warnsignal übersetzt wird. Andere Ausführungsformen zielen nicht auf die Zerstörung des Testleiters sondern auf seinen elektrischen Kontakt mit der Gegenreibfläche ab, der dann ebenfalls von einer geeignet eingerichteten Steuervorrichtung registriert und in ein Warnsignal übersetzt werden kann.

Als ein typisches Verschleißteil werden solche Sensoren regelmäßig als Module geliefert, die bei jedem Reibbelagswechsel mit dem Reibbelag ausgetauscht werden. Die Module umfassen typischerweise einen Sensorkörper und eine Leitungsanordnung. Der Sensorkörper ist von einer Leiterschleife umschlungen. Die Leiterschleife wird dabei von einem isolierten oder nicht-isolierten Kabel gebildet, das im Bereich der Leitungsanordnung als antiparallel geführtes Leiterpaar vorliegt, wobei eine Ader des Leiterpaares als Zu- und die andere Ader als Ableitung der Leiterschleife angesehen werden kann. Obgleich der Begriff des Leiterpaares das Vorliegen zweier separater Leiter suggerieren könnte, wird der Fachmann verstehen, dass beide Adern des Leiterpaares und die Leiterschleife typischerweise aus einem einstückigen Kabel bestehen werden.

Die Leitungsanordnung umfasst normalerweise neben dem Leiterpaar eine dieses umgebende Leiterschutzhülle. Diese ist typischerweise als Schlauch oder Rohr ausgebildet. Sie erstreckt sich zwischen einer sensorkörpernahen Stützbasis am Sensorkörper oder sensorkörpernahen Ende des Leiterpaares und einer sensorkörperfernen Stützbasis im Bereich des sensorkörperfernen Endes des Leiterpaares. Typischerweise ist die Leiterschutzhülle axial elastisch ausgebildet und zwischen den Stützbasen druckbelastet vorgespannt. Die sensorkörperferne Stützbasis wird häufig durch eine Kontaktierungsvorrichtung, insbesondere einen Stecker, gebildet, mit dem ein elektrischer Kontakt zwischen dem Sensor und einem Steuergerät hergestellt werden kann. Die sensorkörpernahe Stützbasis ist bei dem bekannten Sensor gemäß der gattungsbildenden EP 2 175 158 A1 als ein einstückig mit dem Sensorkörper verbundener Stutzen ausgebildet, welcher nutenartige Führungskanäle aufweist, in denen die Adern des Leiterpaares geführt sind, und über den die Leiterschutzhülle klemmend gestülpt ist. Je nach Geometrie des Einzelfalls geht der Stutzen gerade oder gewinkelt vom Sensorkörper ab.

Nachteilig dabei ist, dass für jede Einzelfallgeometrie ein eigener Sensorkörper (inklusive Stutzen) geschaffen werden muss. Die damit verbundenen Herstellungskosten sind erheblich. Auch ist die Vorkonfektionierung in Fällen, in denen Reibbelagsverschleißsensoranordnungen mit einer Mehrzahl miteinander verbundener Sensoren vorkonfektioniert werden sollen, aufwendig und fehleranfällig. Bei einfachem Weglassen des Stutzens entfällt jedoch die sensorkörpernahe Zusammenfassung der Leiterschleife zu einem Leiterpaar, die notwendig ist, um die Leiterschleife eng genug zuzuziehen, sodass sie in der Nut um den Sensorkörper herum fixiert ist und auch bei Erschütterungen nicht abfallen kann.

Aus der DE 40 21 568 A1 ist ein Verfahren zur Herstellung eines Reibbelagverschleißsensors bekannt, bei dem ein Einsatzstück aus Kunststoff, das eine es außen umlaufende, offene Nut aufweist, zunächst von einer Leiterschleife umschlungen wird. Deren zu- und Ableitungen werden an einem Ende des Einsatzstücks mittels eines Schrumpfschlauchs, der keinerlei Kontakt zu dem Einsatzstück hat, kraftschlüssig miteinander zu einem Leiterpaar gebündelt. Alsdann wird die entstandene Konstruktion in eine Kunststoff-Spritzgussform eingebracht und mit demselben Kunststoff, aus dem das Einsatzstück besteht, umspritzt. Es ergibt sich ein einstückiger Sensorkörper, in dessen Innerem die Leiterschleife eng anliegend eingebettet ist. Nachteilig ist der hohe Produktionsaufwand, der aus der notwendigen Kopplung und Synchronisierung von Montage- und Spritzgussschritten resultiert.

Aus der DE 92 15 810 U1 ist ein ähnliches Konzept bekannt, bei dem jedoch das Einsatzstück zweiteilig ausgebildet und die Leiterschleife bereits in ihm, nämlich in einem inneren, von den zwei Teilen zusammengesetzten Kanal eingebettet ist. Das Einsatzstück wird alsdann in eine Axialöffnung eines hohlen, im Übrigen maschinenschraubenartig ausgebildeten Sensorgehäuses eingesetzt und dort durch Verquetschung, Verpressung und/oder Verklebung fixiert. Nachteilig ist auch hier die notwendige Kopplung von rein manuell und zwingend mittels Werkzeugen durchzuführender Arbeitsschritte.

Aus der DE 696 12 179 T2 schließlich ist ein Reibbelagverschleißsensor mit einem zweiteiligen, aus einem Sockel und einer Abdeckhaube bestehenden Sensorkörper bekannt. Der Sockel weist einen von einer Fußplatte aufragenden Bolzen auf, über den bei der Montage die zu einer endständigen Schleife verbundenen Adern eines zweiadrigen Kabels gelegt wird. Das Kabel wird durch eine Nut in einem neben dem Bolzen von der Fußplatte aufragenden Sockelkörper geführt. Anschließend wird die Abdeckhaube über auf den Sockel aufgesetzt, sodass sie auf dem freien Ende des Bolzens sowie auf den Nuträndern des Sockelkörpers aufliegt. Kräfte durch Zugbelastung an dem aus dem Sensorkörper ragenden Kabelende werden von dem Bolzen aufgenommen, von dem die Leiterschleife aufgrund der auf dem Bolzen aufliegenden Abdeckhaube nicht abrutschen kann. Auch hier entsteht ein die Leiterschleife in seinem Inneren einbettender Sensorkörper.

### Aufgabenstellung

Es ist die Aufgabe der vorliegenden Erfindung, einen gattungsgemäßen Reibbelagsverschleißsensor derart weiterzubilden, dass ohne Funktionalitäts- oder Sicherheitsverlust ein größeres Spektrum an Einsatzmöglichkeiten erreicht wird.

### Darlegung der Erfindung

Diese Aufgabe wird in Verbindung mit den Merkmalen des Oberbegriffs von Anspruch 1 dadurch gelöst, dass das Bündelelement, welches die Zu- und Ableitungen (141, 142) zu dem Leiterpaar bündelt, kraft- und/oder formschlüssig in einer korrespondierenden Ausnehmung des Sensorkörpers fixiert ist.

Bevorzugte Ausführungsformen sind Gegenstand der abhängigen Ansprüche.

Der erfindungsgemäße Sensorkörper verzichtet auf den oben als nachteilig beschriebenen Stutzen. Seine in Wechselwirkung mit der elastischen Leiterschutzhülle ausgeübte Funktion der Zusammenfassung der Einzelleiter zu einem Leiterpaar wird nun erfindungsgemäß von dem separaten Bündelelement erfüllt. Um dieses am Sensorkörper zu fixieren, weist der Sensorkörper eine spezielle Ausnehmung auf, in der das Bündelelement kraft- und/oder formschlüssig fixiert wird. Die Erfindung umfasst somit zwei Hauptfälle.

Der erste Hauptfall des Kraftschlusses, in dem das Bündelelement klemmend in der Ausnehmung fixiert ist, umfasst zwei Unterfälle.

Im ersten Unterfall erfolgt die Fixierung durch nach radial außen wirkende, elastische Klemmkräfte des Bündelelementes selbst, dessen Wandung in diesem Fall folglich elastisch zu sein hat. Das Bündelelement erfüllt somit eine Doppelfunktion, deren einzelne Aspekte einander vordergründig zu widersprechen scheinen. Nämlich einerseits die Zusammenfassung der Einzelleiter zu einem Leiterpaar, was nach radial innen wirkende Kräfte verlangt, und andererseits die Fixierung in der Ausnehmung des Sensorkörpers, was nach radial außen wirkende Kräfte verlangt. Die Erfinder haben jedoch herausgefunden, dass dieser Widerspruch tatsächlich nur ein scheinbarer ist, der durch geeignete Formgebung des Bündelelementes aufgehoben werden kann.

Im zweiten Unterfall der kraftschlüssigen Fixierung erfolgt diese durch nach radial innen wirkende, elastische Klemmkräfte der Ausnehmungswandung. Dies kann durch geeignete Formgebung des Sensorkörpers im Bereich der Ausnehmung, wie sie beispielhaft weiter unten gezeigt ist, erreicht werden, ohne dass die Stabilität des restlichen Sensorkörpers, der in der Regel einstückig und stoffeinheitlich mit der Ausnehmungswandung ausgebildet ist, leidet.

Der zweite Hauptfall betrifft eine formschlüssige Fixierung. Diese setzt korrespondierende Formgebungen von Bündelelement und Ausnehmungswandung voraus, wobei bevorzugt wenigstens eines der beiden beteiligten Bauteile eine zur Ausbildung einer Rastverbindung ausreichende Elastizität aufweist.

Sämtliche vorgenannten Fälle können einzeln oder in vollständiger oder teilweise Kombination miteinander realisiert sein, wobei die unterschiedlichen Fallbeiträge im jeweiligen Ergebnis unterschiedliches Gewicht haben können.

Bei einer bevorzugten Ausführungsform der Erfindung ist vorgesehen, dass das Bündelelement zwei einander benachbarte, offene Klemmösen aufweist, von denen die eine die Zuleitung und die andere die Ableitung der Leiterschleife um jeweils mehr als 180° umgreift. Beispielsweise kann das Bündelelement, wie bevorzugt vorgesehen, S-, X- oder E-förmig ausgebildet sein. Die vorgenannte Formgebung der Klemmösen betrifft die kräftefreie Normalform des Bündelelementes, das aufgrund seiner Wandelastizität bei Krafteinwirkung elastisch ausgelenkt werden kann. Ein Einzelleiter, dessen Durchmesser größer als die Umfangsöffnung der Klemmösen, jedoch kleiner als die lichte Weite der Klemmösen ist, kann in eine der Ösen eingerastet werden. Im eingerasteten Zustand ist das Bündelelement kräftefrei; erst bei dem Versuch, den Einzelleiter durch Radialbewegung durch die Umfangsöffnung zu drücken, wirken nach radial innen gerichtete, elastische Wandkräfte dagegen. Bei Varianten mit steifer Bündelelementenwandung müssen entweder die Leitungen wenigstens außen elastisch kompressibel sein oder es muss auf ihre Fixierung im Bündelelement allein, d.h. ohne Wechselwirkung mit der Ausnehmungswandung, verzichtet werden.

Zur Fixierung des Bündelelementes ist die lichte Weite der Ausnehmung des Sensorkörpers vorzugsweise geringfügig kleiner dimensioniert als die Außenkontur des Bündelelementes.

Weist dieses eine elastische Wandung auf, sind so beim axialen Einführen des Bündelelementes in die Ausnehmung nach radial innen gerichtete Kräfte zur Erzeugung einer entsprechenden Verformung des Bündelelementes erforderlich. Dem wirken nach radial außen gerichtete elastische Kräfte der elastischen Wandung des Bündelelementes entgegen. Diese nach radial außen gerichteten Kräfte bleiben nach dem Einsetzen des Bündelelementes in die Ausnehmung erhalten und führen so zu einem dauerhaften Kraftschluss. Dieser kann ggf. durch einen von korrespondierenden Rastvor- und/oder -rücksprüngen vermittelten Formschluss ergänzt werden. Auf diese Weise kann das Bündelelement, welches die einzelnen Leitungen zu einem Leiterpaar bündelt, sicher am Sensorkörper fixiert werden.

Weist hingegen die Ausnehmung eine elastische Wandung auf, sind beim axialen Einführen des Bündelelementes in die Ausnehmung nach radial außen gerichtete Kräfte zur Erzeugung einer entsprechenden Verformung der Ausnehmungswandung erforderlich. Dem wirken nach radial innen gerichtete elastische Kräfte der elastischen Wandung der Ausnehmung entgegen. Diese nach radial innen gerichteten Kräfte bleiben nach dem Einsetzen des Bündelelementes in die Ausnehmung erhalten und führen so zu einem dauerhaften Kraftschluss. Dieser kann ggf. durch einen von korrespondierenden Rastvor- und/oder -rücksprüngen vermittelten Formschluss ergänzt werden. Auf diese Weise kann das Bündelelement, welches die einzelnen Leitungen zu einem Leiterpaar bündelt, sicher am Sensorkörper fixiert werden.

In beiden Fällen können die relativen Dimensionen von Bündelelement und Ausnehmung auch so gestaltet sein, dass die Fixierung des Bündelelementes in Ergebnis rein formschlüssig erfolgt.

Bei einer alternativen Ausgestaltung des Bündelelementes kann dieses ringförmig ausgebildet sein. Dabei kann es sich um einen offenen oder geschlossenen Ring handeln. Der Begriff "Ring" ist dabei weit zu verstehen und umfasst nicht nur runde, sondern auch ovale oder polygone Gestaltungen. Im Fall des offenen Rings kann die Öffnung zur Aufnahme des Leiterpaares gespreizt und das Leiterpaar durch die nach radial innen wirkenden Rückstellkräfte zusammengefasst werden. Im Fall des geschlossenen Rings muss das Leiterpaar von einem Ende her in das Bündelelement eingefädelt werden. Bzgl. der Fixierung in der Ausnehmung des Sensorkörpers kann auf das oben zum S-, X- oder E-förmigen Bündelelement gesagte verwiesen werden.

Bevorzugt ist vorgesehen, dass die äußere Umgrenzung der Ausnehmung des Sensorkörpers von einer Mehrzahl einzelner, voneinander beabstandeter Wandabschnitte gebildet ist. Je nach Form des Bündelelementes genügen hier drei oder vier säulenartige Wandabschnitte. Diese bilden Anlagepunkte für das Bündelelement, auf die die oben erläuterten Radialkräfte wirken.

Bei einer Weiterbildung dieser Variante ist vorgesehen, dass zwischen den Wandabschnitten nach außen gerichtete Spreizhöcker angeordnet sind, welche die Wandung des Bündelelementes nach radial außen in die Lücken zwischen den Wandabschnitten hinein verformen. Durch diese Spreizhöcker werden die elastischen Kräfte der Bündelelementewandung verstärkt. Auch wird auf diese Weise einer Abnahme dieser Kräfte durch Materialermüdung entgegengewirkt.

Ist, wie bei einer bevorzugten Ausführungsform vorgesehen, die Höhe der Wandung des Bündelelementes größer als die Tiefe der Ausnehmung des Sensorkörpers, steht ein Höhenabschnitt der Bündelelemente-Wandung nach dem Einsetzen in die Ausnehmung über deren Rand über. Dieser überstehende Höhenabschnitt kann als Ansatzpunkt für die Fixierung einer das Leiterpaar umgebenden Leiterschutzhülle genutzt werden. Wie aus dem Stand der Technik bekannt, kann die Leiterschutzhülle schlauch- oder rohrförmig ausgestaltet sein, wobei bevorzugt eine axiale Elastizität und günstigerweise auch eine radiale Elastizität vorhanden ist. Im Fall einer radialen Elastizität kann vorgesehen sein, dass die das Leiterpaar in seinem weiteren Verlauf umgebende Leiterschutzhülle mit ihrem sensorkörperseitigen Ende außen auf dem die Ausnehmung überragenden Höhenabschnitt der Wandung des Bündelelementes klemmt. Fehlt eine solche radiale Elastizität kann die Fixierung mit anderen Mitteln, beispielsweise durch Verklebung oder mittels einer Schlauchschelle erfolgen.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: einen erfindungsgemäßen Sensorkörper mit S-förmigem Bündelelement,
- Figur 2:: eine Variante eines erfindungsgemäßen Sensorkörpers mit S-förmigem Bündelelement,
- Figur 3:: einen erfindungsgemäßen Sensorkörper mit ringförmigem Bündelelement,
- Figur 4:: eine Variante eines erfindungsgemäßen Sensorkörpers mit ringförmigem Bündelelement.

### Beschreibung bevorzugter Ausführungsformen

Gleiche Bezugszeichen in den Figuren deuten auf gleiche oder analoge Elemente hin.

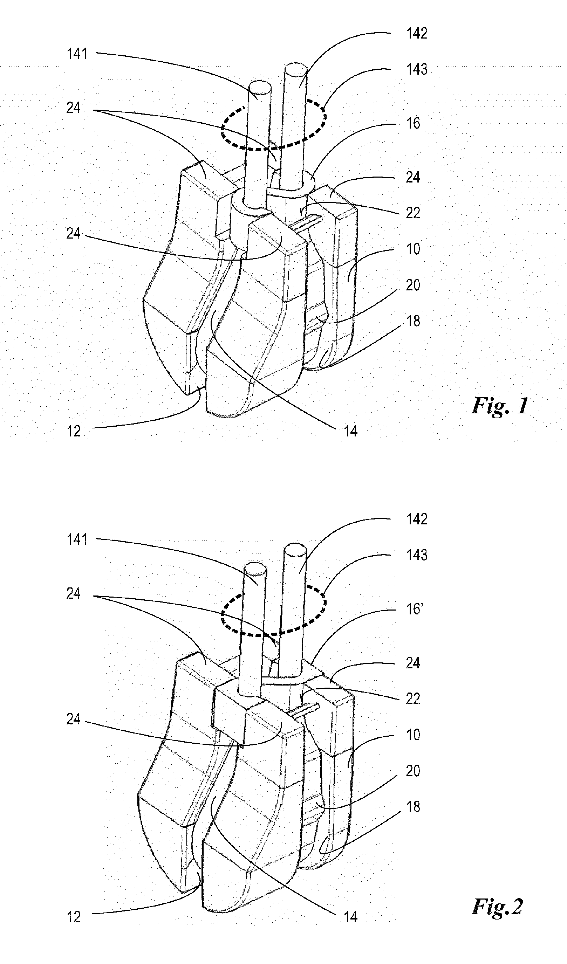

Figur 1 zeigt einen Sensorkörper 10, in dessen ihn umlaufender Leiterschleifennut 12 eine Leiterschleife 14 verlegt ist. Die Leiterschleife weist eine Zuleitung 141 und eine Ableitung 142 auf, die von einem S-förmigen Bündelelement 16 zu einem Leiterpaar 143 zusammengefasst sind.

In einer weiteren, den Sensorkörper 10 senkrecht zur Leiterschleifennut 12 umlaufenden Federklammernut 18 ist eine Federklammer 20 angeordnet, die der klemmenden Fixierung des Sensorkörpers 10 in einer Aussparung eines nicht dargestellten Reibbelagträgers dient.

Die Wandung des vorzugsweise aus Kunststoff im Kunststoffspritzgußverfahren hergestellten Bündelelementes 16 weist eine Form- und Materialelastizität auf. Bei der dargestellten Ausführungsform bilden die beiden Bögen des "S" jeweils eine offene Klemmöse, deren lichte Weite an den Außendurchmesser der Leitungen 141, 142 angepasst ist. Insbesondere ist die lichte Weite der Ösen größer als der Außendurchmesser der Leitungen 141, 142, dieser jedoch seinerseits größer als die Umfangsöffnung der Ösen.

Die Leitungen 141, 142 können somit unter elastischer Aufweitung der Ösen in diese eingeschoben und dort rastend gehalten werden.

Zur Fixierung des Bündelelementes 16 ist eine Ausnehmung 22 im Sensorkörper 10 vorgesehen, die beim gezeigten Ausführungsbeispiel aus vier säulenartigen Wandabschnitten 24 gebildet ist. Die säulenartigen Wandabschnitte 24 bilden die Anlagepunkte für die Außenseite der Wandung des Bündelelementes 16. Ihre Abstände sind kleiner bemessen als die Abstände der korrespondierenden Anlagepunkte der Bündelelementewandung. Ein Einführen des Bündelelementes in Axialrichtung (bzgl. des Leiterpaares 143) ist daher nur unter elastischer Verformung, insbesondere nach radial innen gerichteter Verformung des Bündelelementes 16 möglich. Nach dem Einführen wirken die form- und materialelastischen Kräfte nach radial außen und fixieren das Bündelelement 16 klemmend in der Ausnehmung 22.

Figur 2 zeigt eine leicht unterschiedliche Variante, bei der die S-Bögen des Bündelelementes 16' die Leitungen 141, 142 weniger weit umgreifen, sodass ihr Einführen in das Bündelelement 16' ohne dessen Aufspreizung möglich ist. Diese Variante bietet sich daher für im Wesentlichen steife Bündelelemente an, die durch die die Klemmkraft der elastisch ausgebildeten, säulenartigen Wandabschnitte 24 ausgeübt wird.

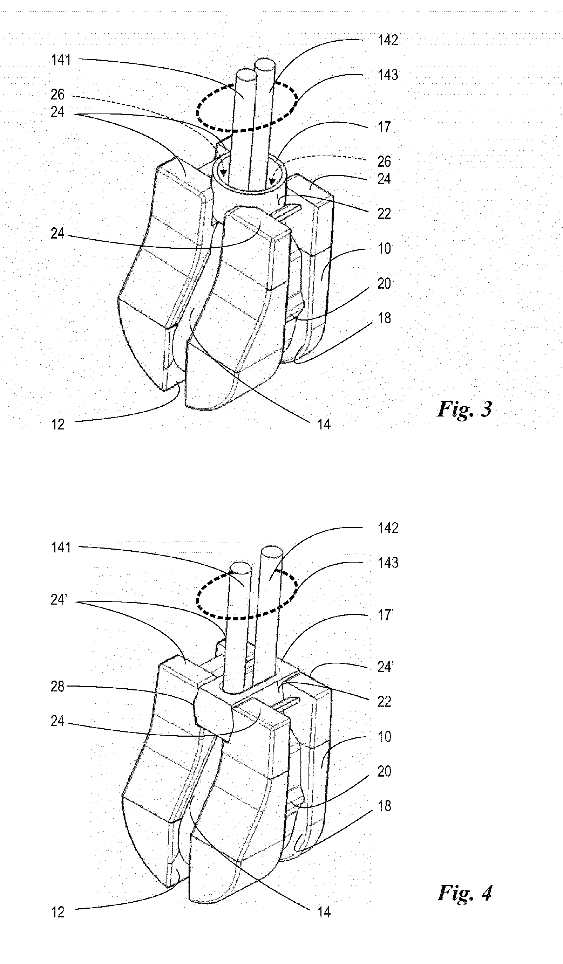

Figur 3 zeigt eine alternative Ausführungsform der Erfindung mit einem ringförmigen Bündelelement 17, welches bei der dargestellten Ausführungsform insbesondere als geschlossener Ring ausgebildet ist. Folglich muss das Bündelelement 17 auf das Leiterpaar 143 aufgefädelt werden. Hiervon abgesehen, kann zur Beschreibung voll umfänglich auf das zuvor Gesagte verwiesen werden. Alternativ könnte ein offener Ring als Bündelelement vorgesehen sein.

In Figur 3 nicht dargestellt sind nach außen gerichtete Spreizhöcker 26, welche die Wandung des Bündelelementes 17 in die Lücken zwischen den säulenartigen Wandabschnitten 24 hinein verformen, um die Klemmkräfte zu verstärken. Die Positionen, an denen solche Spreizhöcker anzuordnen wären, sind jedoch durch die gestrichelten Bezugszeichenlinien angedeutet.

Weiter erkennbar bei der Ausführungsform von Figur 3 ist, dass die Wandung des Bündelelementes 17 im in die Ausnehmung 22 eingesetzten Zustand über die säulenartigen Wandabschnitte 24 hinausragt. Dieser über die Ausnehmung 22 hinausragende Höhenabschnitt der Wandung kann in nicht dargestellter Weise als Ansatz für eine Fixierung einer ebenfalls nicht dargestellten Schutzhülle des Leiterpaares dienen. Die Fixierung des sensorkörperseitigen Endes der Schutzhülle an dem überstehenden Höhenabschnitt der Bündelelementewandung kann kraft- oder stoffschlüssig, seltener formschlüssig (beispielsweise mittels eines Gewindes) erfolgen.

Figur 4 zeigt eine Variante eines ringförmigen Bündelelementes 17', welches (zumindest auch) formschlüssig in der Ausnehmung 22 fixiert ist. Die rhomboide Formgebung des Bündelelementes 17' korrespondiert hierzu mit entsprechenden Rücksprüngen 28 in den Anlageflächen der säulenartigen Wandelemente 24'. Das Einführen des Bündelelementes 17' kann bei hinreichender Elastizität der säulenartigen Wandabschnitte 24' axial oder aber durch seitliches Einschieben erfolgen, was auch bei steifen Ausnehmungswandungen möglich wäre.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere kann die spezielle Formgebung der einzelnen Elemente vom Fachmann an die Erfordernisse des Einzelfalls angepasst werden. Selbstverständlich ist es auch möglich, mehrere erfindungsgemäße Sensoren zu Sensorkonstellationen zusammenzuschalten. Insbesondere hierbei bietet die hohe Konfigurationsflexibilität, welche durch die Erfindung gewährt wird, große Vorteile.

### Bezugszeichenliste

- 10: Sensorkörper
- 12: Leiterschleifennut
- 14: Leiterschleife
- 141: Zuleitung von 14
- 142: Ableitung von 14
- 143: Leiterpaar
- 16, 16': Bündelelement
- 17, 17': Bündelelement
- 18: Federklammernut
- 20: Federklammer
- 22: Ausnehmung
- 24, 24': säulenartiger Wandabschnitt
- 26: Spreizhöckerposition
- 28: Rücksprung in 24'

## Patentansprüche

1. Reibbelagsverschleißsensor mit einem Sensorkörper (10), der von einer in einer den Sensorkörper (10) außen umlaufenden, offenen Nut (12) verlegten Leiterschleife (14) umschlungen ist, wobei eine Zuleitung (141) zu und eine Ableitung (142) von der Leiterschleife (14) an einem Ende des Sensorkörpers (10) zu einem Leiterpaar (143) gebündelt und am Sensorkörper (10) fixiert sind,
**dadurch gekennzeichnet,**
**dass** ein Bündelelement (16; 17), welches die Zu- und Ableitungen (141, 142) zu dem Leiterpaar bündelt, kraft- und/oder formschlüssig in einer korrespondierenden Ausnehmung (22) des Sensorkörpers (10) fixiert ist.

2. Reibbelagsverschleißsensor nach Anspruch 1,
**dadurch gekennzeichnet,**
**dass** das Bündelelement (16) zwei einander benachbarte, offene Klemmösen aufweist, von denen die eine die Zuleitung (141) und die andere die Ableitung (142) der Leiterschleife (14) um jeweils mehr als 180° umgreift.

3. Reibbelagsverschleißsensor nach Anspruch 2,
**dadurch gekennzeichnet,**
**dass** das Bündelelement (16) S-, X- oder E-förmig ausgebildet ist.

4. Reibbelagsverschleißsensor nach Anspruch 1,
**dadurch gekennzeichnet,**
**dass** das Bündelelement (17) ringförmig ausgebildet ist.

5. Reibbelagsverschleißsensor nach einem der vorangehenden Ansprüche,
**dadurch gekennzeichnet,**
**dass** die äußere Umgrenzung der Ausnehmung (22) von einer Mehrzahl einzelner, voneinander beabstandeter Wandabschnitte (24) gebildet ist.

6. Reibbelagsverschleißsensor nach Anspruch 4 und 5,
**dadurch gekennzeichnet,**
**dass** zwischen den Wandabschnitten (24) nach außen gerichtete Spreizhöcker (26) angeordnet sind, welche die Wandung des Bündelelementes es (17) nach radial außen in die Lücken zwischen den Wandabschnitten (24) hinein verformen.

7. Reibbelagsverschleißsensor nach einem der vorangehenden Ansprüche,
**dadurch gekennzeichnet,**
**dass** die Höhe der Wandung des Bündelelementes größer ist als die Tiefe der Ausnehmung (22).

8. Reibbelagsverschleißsensor nach Anspruch 7,
**dadurch gekennzeichnet,**
**dass** das Leiterpaar in seinem weiteren Verlauf von einer radial elastischen Leiterschutzhülle umgeben ist, deren sensorkörperseitiges Ende außen auf dem die Ausnehmung überragenden Höhenabschnitt der Wandung des Bündelelementes klemmt.

## Claims

1. A friction lining wear sensor with a sensor body (10), enclosed in a conductor loop (14) that is laid into an open groove (12) running around the periphery of the sensor body (10), wherein an input lead (141) to and an output lead (142) from the conductor loop (14) are-bundled into one pair of conductors (143) on one end of the sensor body (10) and are fixed to the sensor body (10),
**characterized in that**
one bundling element (16; 17), which bundles the input and output leads (141, 142) into the pair of conductors, is fixed in a corresponding recess (22) of the sensor body (10) in a form-fit and/or a force-fit way.

2. The friction lining wear sensor according to Claim 1,
**characterized in that**
the bundling element (16) comprises two adjacent, open clamping ears, one of which grasps around the input lead (141) and the other of which grasps around the output lead (142) of the conductor loop (14) by more than 180° in each case.

3. The friction lining wear sensor according to Claim 2,
**characterized in that**
the bundling element (16) is shaped as an S, X, or E.

4. The friction lining wear sensor according to Claim 1,
**characterized in that**
the bundling element (17) is annular in shape.

5. The friction lining wear sensor according to any of the preceding claims,
**characterized in that**
the outer boundary of the recess (22) is formed by a plurality of individual wall sections (24) that are spaced apart from each other.

6. The friction lining wear sensor according to Claims 4 and 5,
**characterized in that**
outwardly facing expanding mandrels (26), which deform the wall of the bundling element (17) radially towards the outside into the gaps between the wall sections (24), are arranged between the wall sections (24) .

7. The friction lining wear sensor according to any of the preceding claims,
**characterized in that**
the height of the wall of the bundling element is greater than the depth of the recess (22).

8. The friction lining wear sensor according to Claim 7,
**characterized in that**
the pair of conductors in its further course is surrounded by a radially elastic protective sheath, of which the end facing the sensor body externally clamps onto the elevated section of the bundling element wall that projects beyond the recess.

## Revendications

1. Capteur d'usure de garniture de friction doté d'un corps de capteur (10), renfermé dans une boucle de conducteur (14) placée dans une rainure ouverte (12) entourant la périphérie du corps de capteur (10), un fil d'entrée (141) vers la boucle conductrice (14) et un fil de sortie (142) venant de ladite boucle étant groupées pour former une paire de conducteurs (143) sur une extrémité du corps de capteur (10) et étant montées sur le corps de capteur (10),
**caractérisé en ce que**
un élément groupant (16; 17), qui rassemble les fils d'entrée et de sortie (141, 142) en une paire de conducteurs, est monté par friction ou/et par concordance de forme dans une échancrure correspondante (22) du corps de capteur (10).

2. Capteur d'usure de garniture de friction selon la revendication 1,
**caractérisé en ce que**
l'élément groupant (16) comprend deux boucles de serrage ouverts adjacents, dont l'une serre le fil d'entrée (141) et l'autre le fil de sortie (142) de la boucle de conducteur (14) à plus de 180° dans chaque cas.

3. Capteur d'usure de garniture de friction selon la revendication 2,
**caractérisé en ce que**
l'élément groupant (16) présente la forme de S, X, ou E.

4. Capteur d'usure de garniture de friction selon la revendication 1,
**caractérisé en ce que**
l'élément groupant (17) présente une forme annulaire.

5. Capteur d'usure de garniture de friction selon une quelconque des revendications précédentes,
**caractérisé en ce que**
la limite extérieure de l'échancrure (22) est formée par une pluralité de sections individuelles de paroi (24) qui sont à distance l'une de l'autre.

6. Capteur d'usure de garniture de friction selon les revendications 4 et 5
**caractérisé en ce que**
des mandrins d'écartement tournés vers l'extérieur (26), qui déforment la paroi de l'élément groupant (17) radialement vers l'extérieur pour l'engager dans les espaces entre les sections de paroi (24), sont disposés entre les sections de paroi (24).

7. Capteur d'usure de garniture de friction selon une quelconque des revendications précédentes,
**caractérisé en ce que**
la hauteur de la paroi de l'élément groupant est supérieure à la profondeur de l'échancrure (22).

8. Capteur d'usure de garniture de friction selon la revendication 7,
**caractérisé en ce que**
la paire de conducteurs dans sa suite est entourée d'une gaine protectrice élastique dans la direction radiale, dont l'extrémité tournée vers le corps de capteur est serrée de l'extérieur à la section élevée de la paroi de l'élément groupant qui dépasse de l'échancrure.
